Europäisches Patentamt

European Patent Office

Office européen des brevets

(11) Publication number: **0 252 728 B1**

## (12) EUROPEAN PATENT SPECIFICATION

(45) Date of publication of patent specification: 27.02.91 (51) Int. Cl.⁵: **F16C 33/04**

(21) Application number: 87306019.8

(22) Date of filing: 08.07.87

(54) Metallic slide members to be used with ceramic slide members and sliding assemblies using the same.

(30) Priority: 11.07.86 JP 162101/86
24.06.87 JP 155400/87

(43) Date of publication of application:
13.01.88 Bulletin 88/02

(45) Publication of the grant of the patent:
27.02.91 Bulletin 91/09

(84) Designated Contracting States:
DE GB SE

(56) References cited:
DE-A- 3 435 821
GB-A- 2 079 869

PATENT ABSTRACTS OF JAPAN vol. 3, no.31,
page 97 E 98,16th March 1979; &JP-A-5410769
(SUWA SEIKOSHA K.K.) 26-01-1979

(73) Proprietor: NGK INSULATORS, LTD.
2-56, Suda-cho, Mizuho-ku
Nagoya City Aichi Pref.(JP)

(72) Inventor: Oda, Isao
19 Gokuraku 3-chome,Meito-ku
Nagoya City,Aichi Pref.(JP)

(74) Representative: Paget, Hugh Charles Edward
et al
MEWBURN ELLIS & CO. 2/3 Cursitor Street
London EC4A 1BQ(GB)

**Description**

The present invention relates to a sliding assembly consisting of a ceramic member and a metallic member, and the invention particularly relates to a metallic slide member to slide relative to a ceramic member.

Ceramics having excellent wear resistance have widely been used as slide members. However, when a ceramic slide member is used, wear of a metallic slide member to slide relative to the ceramic slide member becomes greater. For this reason, in order to improve wear resistance of surfaces of the metallic slide members, the surfaces have been coated by a plasma-sprayed layer or a hard phase has been included in the metal surface layer. For instance, JP-A- 62-13,820 discloses that wear resistance of a metallic member to slide relative to silicon nitride, sialon, partially stabilized zirconia, or silicon carbide is improved by coating the metallic member with a mixture of Cu and LiF.

Further, JP-A- 59-9,148 discloses a slide member made of a super hard sintered alloy in which a hard phase made of WC is bonded with a binder phase of Co.

However, the former coating method has a disadvantage that the coated layer is likely to peel when it is too thick, while it has a short life when it is too thin. On the other hand, the latter sintered alloy has a disadvantage that it is difficult to produce and process and production cost is high.

GB-A- 2079869 describes a solid-lubricated bearing in which a ceramic component contains at least one of various metals, including Mo, Co, Ti and W. The metal forms a solid lubricant phase of a bearing surface.

It is an object of the present invention to obviate the above-mentioned problems, and to provide a metallic member having excellent wear resistance, as a metallic slide member for a ceramic slide member, without necessitating a surface treatment such as coating or inclusion of a hard phase as in the case of the sintered alloy.

It is another object of the present invention to provide a wear resistive sliding assembly consisting of such a metallic slide member and a ceramic slide member.

The present invention, is set out in claim 1.

In the invention, the metallic slide member forms a lubricating layer of a metallic coat (hereinafter referred to as "metallic coat lubricating layer") onto a sliding surface of the ceramic slide member by transferring a metal on the sliding surface of the metallic slide member onto the ceramic sliding surface. The sliding surface of the metallic member preferably contains one or more kinds of alloying elements consisting of Mo, Co, Ti and W in not less than a specified amount.

According to another aspect of the present invention, there is provided a sliding assembly consisting of a metallic slide member of claim 1 and a ceramic slide member,

In the conventional metal-ceramic slide assembly, it is known that a metal is transferred upon a slide surface of a ceramic member or *vice versa*. On the other hand, the metallic slide member according to the present invention is characterized in that a sufficient amount of a metal is transferred to the slide surface of the ceramic slide member to form a metallic coat lubricating layer on the sliding surface of the ceramic slide member.

Thereby, excellent wear resistance can be obtained at room and elevated temperatures.

Embodiment of the invention and other features and advantages available with the present invention will be given in the following description in conjunction with the attached drawings, wherein:

Fig. 1 is a schematic view illustrating a sliding mode in a tester used for measurement of a sliding characteristic of a slide member according to the present invention;

Fig. 2 is a diagram of X-ray energy spectrum measured by an energy-dispersive X-ray microanalyzer with respect to a sliding surface of a ceramic test piece having slide in combination with a test sample No. 3 according to the present invention; and

Fig. 3 is a diagram showing surface roughness profile of the ceramic test piece slid in combination with the test sample No. 3 according to the present invention.

In the specification and claims, the term "metallic coat lubricating layer" is used to mean a layer of a metal, an oxide of the metal, or a reaction product between the metal and a ceramic material which is firmly stuck to a sliding surface of the ceramic member through physical adsorption or chemical reaction with the ceramic sliding surface as a layer of such a thickness that the transferred layer may prevent the sliding surface of the ceramic slide member from directly contacting with the sliding surface of the opponent metallic slide member and largely reduce wear of the metallic slide member. In practice, the thickness of the transferred layer necessary to function as a lubricating layer is preferably greater than the maximum surface roughness of the sliding surfaces of the metallic slide member and the ceramic slide member. It is preferable that the thickness of the transferred layer is not less than about 0.5 $\mu$m with respect to an ordinarily polished surface. The reason why a metal containing one or more kinds of alloying element consisting of Mo, Co, Ti and W in not less than a specific amount is preferred is that each of Mo, Co, Ti and W has a property of forming a transferred layer upon reaction with a ceramic material.

Since the transfer of the metal upon the ceramic member becomes generally more conspicuous as a temperature becomes higher, the metallic slide member has more excellent wear resistance at higher temperatures.

When the ceramic and metallic members slide relative to each other under the above-mentioned lubrication, a slight solid contact between them may occur to cause wear. For this reason, although the metallic slide member according to the present invention has an excellent sliding characteristic without necessitating a special lubrication, it goes without saying that the invention is also effective with application of an oil lubricant or a solid lubricant.

In the case where there is a possibility that a coating layer of a coated slide member is worn or peels so that a mother metal is locally or entirely brought into contact with an opponent slide member, the metallic slide member according to the present invention is also effective as a substrate metal to be coated.

As compared with the metallic slide member, the specific wear amount of the ceramic slide member is indeed smaller. But, the specific wear amount of the ceramic slide member can be reduced to a substantially negligible degree by the formation of the metal coat lubricating layer according to the present invention.

As ceramic materials of the ceramic slide member in the sliding assembly according to the present invention, silicon nitride, sialon, partially stabilized zirconia and silicon carbide are preferably used.

Example 1

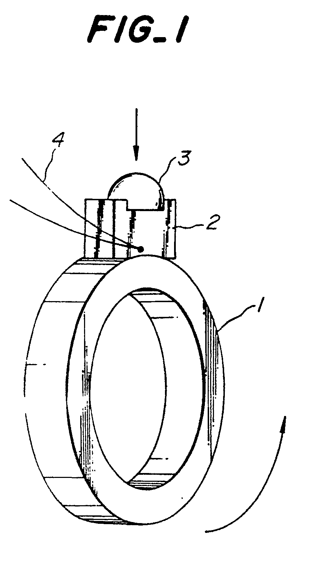

Fig. 1 shows a schematic view illustrating a sliding mode of a tester used for measurement of a sliding characteristic of the slide member according to the present invention. A ceramic ring test piece 1 had a ring-like shape of an outer diameter of 35 mm and a width of 8 mm, and its outer peripheral sliding surface was finished to an average sliding surface roughness of 0.2 $\mu$m. A metallic test piece 2 had a block-like shape of 16 mm x 10 mm x 6 mm, and its sliding surface was finished to a sliding surface roughness of 0.1 to 0.2 $\mu$m. A load of 20 N was downwardly applied upon the metallic test piece 2 by way of a spherical test 3 by means of a fulcrum type loader (not shown). A sliding test was performed in a dry state in air while the ceramic ring test piece was rotated at 1,450 rpm (a peripheral speed: 2.7 m/s). In a high temperature test, an atmosphere around a sliding section was heated in an electric furnace, and a temperature was measured by a thermocouple 4 spot welded to the surface of the metallic test piece 2 spaced from the sliding surface by 1 mm. A room temperature test was performed without being heated by the electric furnace, but a temperature at the thermocouple 4 was about 150$^\circ$C due to generation of a frictional heat.

With respect to pressurelessly sintered silicon nitride among ceramic materials and various metallic materials shown in the following Table 1, sliding tests were carried out by using the above-mentioned tester, and coefficients of friction during sliding and specific wear rates after sliding over a specific distance were measured. Results were shown in Table 2a. Results regarding respective alloy components are given in Tables 2b to 2e, respectively. It is understood from Table 2b that if Mo is contained in an amount of not less than 32 wt%, a practically sufficient specific wear rate of not more than $10^{-8}$ mm²/N can be obtained. Further, it is also understood from Tables 2c, 2d and 2e that when Co, Ti or W is contained in an amount of not less than 20 wt%, not less than 84 wt%, or not less than 5 wt%, respectively, the specific wear rate is not more than $10^{-8}$ mm²/N. The specific wear rates of the metallic members outside the scope of the present invention are all as much as not less than $10^{-8}$ mm²/N.

Example 2

By using the same sliding tester and experimental conditions as in Example 1, sliding tests were carried out with respect to combinations of M2 steel which exhibited good sliding characteristic in Example 1 and various ceramics or with respect to a combination of M2 steel and silicon nitride when Cu + PbO were plasma sprayed onto the sliding surface of the M2 steel as a solid lubricant. Results are shown in Table 3. The specific wear rate of M2 steel was not more than $10^{-8}$ mm²/N with respect to any of the ceramics. Further, the M2 steel coated with Cu + PbO had a smaller specific wear rate as compared with a non-treated M2 steel.

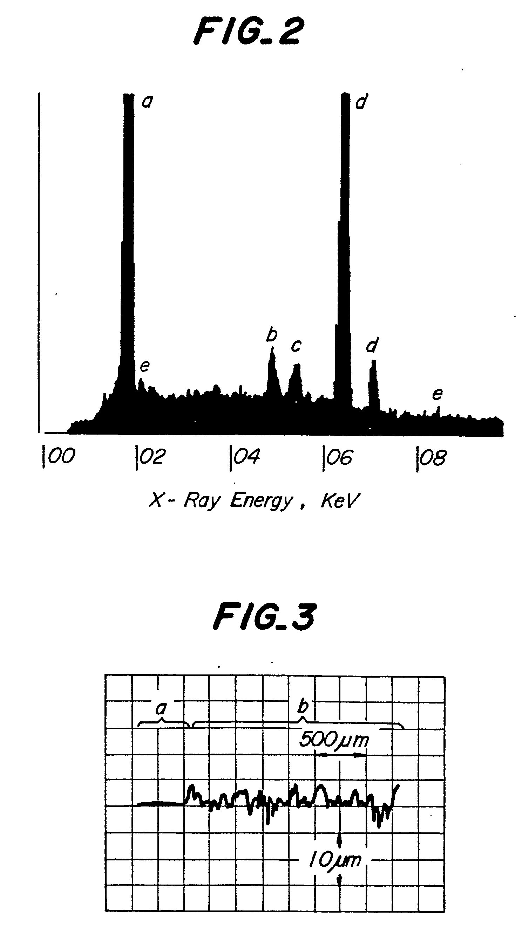

Fig. 2 shows a measurement result of X-ray energy spectrum of a sliding surface of a ceramic test piece slid in combination with a sample No. 33 according to the present invention by using an energy-dispersive X-ray microanalyzer. This spectrum was obtained under conditions that an energy of an incident electrons was 20 KeV and an irradiated area was 1 $\mu$m$\phi$. In Fig. 2, "a", "b", "c", "d", and "e" correspond to X-rays due to Si element, Ce element, Cr element, Fe element, and W element, respectively. As obvious from the spectrum thus obtained, Fe, Cr and W are alloying elements of M2, and a sufficient amount of M2 steel was transferred to the ceramics. Si is an element contained in $Si_3N_4$. $CeO_2$ was used as a sintering aid for $Si_3N_4$ and Ce is an element constituting an intergranular phase.

Fig. 3 shows a profile of the surface roughness of a ceramic test piece slid in combination with the test sample No. 33 according to the present invention. In Fig. 3 "a" and "b" are a non-slid area and a sliding surface area, respectively. As obvious from this figure, the surface roughness of the sliding surface "b" increased due to wear, but a plurality of areas higher by 2 to 4 $\mu$m than the non-slid area "a" exists, which shows that the metal was transferred onto the ceramics.

Table 3 gives increased weights of the slid ceramic test pieces due to the transfer. The increased weight being 0 mg means that the wear amount is equal to the transferred amount.

As evident from the foregoing explanation, since the metallic slide member according to the present invention forms a metallic coat lubricating layer onto the ceramic sliding surface through a metal being transferred onto the sliding surface of the ceramic slide member, it can exhibit excellent wear resistance at room temperature as well as particularly at elevated temperatures.

Further, the metallic slide member according to the present invention is featured by more facilitated manufacturing and processing and less expensive cost as compared with the conventional surface-coating method. Thus, the present invention can favorably be applied to parts combinations of a cylinder liner and a piston ring, a valve and a valve seat, a tappet or a rocker arm tip and a cam, etc.

EP 0 252 728 B1

## Table 1

| | Abbreviation | Material (composition wt%) | Hardness (GPa) |
|---|---|---|---|
| | SN | Pressurelessly sintered silicon nitride | 15 |
| | SA | Pressurelessly sintered sialon | 14 |
| | PSZ | Pressurelessly sintered partially stabilized zirconia containing $Y_2O_3$ | 12 |
| | SC | Pressurelessly sintered silicon carbide | 28 |
| Present invention | Mo | Mo | 2.8 |
| | Ti 318 | Ti-6Al 4V | 3.5 |
| | Ti 371 | Ti-2.5Al, 13.5Si | 3.8 |
| | Tribaloy 700 | Ni-15Cr, 32Mo, 3Si | 5.2 |
| | Trobaloy 100 | Co-35Mo, 10Si | 4.3 |
| | Haynes 25 | Co-20Cr, 10Ni, 15W, 3Fe, 0.1C | 3.3 |
| | Nimonic 91 | Ni-28Cr, 20Co, 0.1C, 1Al, 1Nb | 4.0 |
| | M2 | Fe-0.8C, 4Cr, 6W, 5Mo, 2V | 9.5 |
| | Stellite 1 | Co-32Cr, 12.5W, 2.4C, 0.6Si, 2.3Fe, 2.3Ni, 0.2Mo | 6.4 |
| | Stellite 6 | Co-29Cr, 4W, 1.1C, 1.2Si, 2.3Fe, 2.6Ni | 4.5 |
| Outside present invention | Incoloy 625 | Ni-21Cr, 9Mo, 2.5Fe, 3Cb | 2.5 |
| | Incoloy 617 | Ni-22Cr, 12Co, 9Mo, 1.2Al, 1.5Fe | 2.4 |
| | SUS 316 | Fe-0.08C, 17Cr, 12Ni, 2.5Mo | 1.8 |
| | R 41 | Ni-19Cr, 11Co, 10Mo, 5Fe, 0.1C | 3.2 |
| | Hasteloy X | Ni-22Cr, 9Mo, 19Fe, 1.5Co, 0.6W, 0.1C | 2.2 |

## Table 2(a)

| | | Test piece | | Temperature (°C) | Slid distance (km) | Coefficient of friction | Specific wear rate (mm²/N) | Ceramics weight change (mg) |
|---|---|---|---|---|---|---|---|---|
| | | Metal | Ceramics | | | | | |
| Present invention | No. 1 | Mo | SN | 600 | 165 | 0.45 | $4\times10^{-9}$ | -1 |
| | No. 2 | " | SN | RT | 165 | 0.35 | $2\times10^{-9}$ | +1.5 |
| | No. 3 | Ti 318 | SN | 600 | 165 | 0.50 | $4\times10^{-9}$ | +2 |
| | No. 4 | " | SN | RT | 165 | 0.35 | $1\times10^{-9}$ | +11.5 |
| | No. 5 | Ti 371 | SN | 600 | 165 | 0.40 | $3\times10^{-9}$ | +8 |
| | No. 6 | Tribaloy 700 | SN | 600 | 165 | 0.25 | $4\times10^{-9}$ | +9 |
| | No. 7 | Tribaloy 100 | SN | 600 | 165 | 0.30 | $6\times10^{-9}$ | +3 |
| | No. 8 | Haynes 25 | SN | 600 | 165 | 0.45 | $7\times10^{-9}$ | -2 |
| | No. 9 | Nimonic 91 | SN | 600 | 165 | 0.50 | $9\times10^{-9}$ | +2 |
| | No. 10 | M2 | SN | RT | 165 | 0.50 | $7\times10^{-9}$ | 0 |
| | No. 11 | " | SN | 400 | 165 | 0.45 | $4\times10^{-9}$ | +1 |
| | No. 12 | " | SN | 600 | 165 | 0.45 | $9\times10^{-10}$ | +3 |
| | No. 13 | Stellite 1 | SN | RT | 165 | 0.40 | $6\times10^{-9}$ | 0 |
| | No. 14 | " | SN | 400 | 165 | 0.35 | $3\times10^{-9}$ | +2 |
| | No. 15 | " | SN | 600 | 165 | 0.30 | $2\times10^{-9}$ | +3 |
| | No. 16 | Stellite 6 | SN | 600 | 165 | 0.40 | $4\times10^{-9}$ | 2 |
| Outside present invention | No. 17 | Incoloy 625 | SN | 600 | 165 | 0.45 | $3.3\times10^{-8}$ | -3 |
| | No. 18 | Incoloy 617 | SN | 600 | 165 | 0.40 | $4.4\times10^{-8}$ | -2 |
| | No. 19 | SUS 316 | SN | 600 | 165 | 0.50 | $2.8\times10^{-8}$ | -2 |
| | No. 20 | R 41 | SN | 600 | 165 | 0.45 | $1.9\times10^{-8}$ | -10 |
| | No. 21 | Hasteloy X | SN | 600 | 165 | 0.50 | $1.2\times10^{-8}$ | -5 |

Table 2(b)    Mo series

| | | Test piece | Temper-ature (°C) | Slid distance (km) | Coeffi-cient of friction | Specific wear rate (mm²/N) | Ceramics weight change (mg) | Mo content (wt%) |
|---|---|---|---|---|---|---|---|---|
| | | Metal | | | | | | |
| Present inven-tion | No.  1 | Mo | 600 | 165 | 0.45 | $4 \times 10^{-9}$ | −1 | 100 |
| | No.  2 | " | RT | 165 | 0.35 | $2 \times 10^{-9}$ | +1.5 | 100 |
| | No.  6 | Tribaloy 700 | 600 | 165 | 0.25 | $4 \times 10^{-9}$ | +9 | 32 |
| | No.  7 | Tribaloy 100 | 600 | 165 | 0.30 | $6 \times 10^{-9}$ | +3 | 35 |
| Outside present inven-tion | No. 16 | Incoloy 625 | 600 | 165 | 0.45 | $3.3 \times 10^{-8}$ | −3 | 9 |
| | No. 17 | Incoloy 617 | 600 | 165 | 0.40 | $4.4 \times 10^{-8}$ | −2 | 9 |
| | No. 18 | SUS 316 | 600 | 165 | 0.50 | $2.8 \times 10^{-8}$ | −2 | 10 |
| | No. 19 | R 41 | 600 | 165 | 0.45 | $1.9 \times 10^{-8}$ | −10 | 9 |

Table 2(c)    Co series

| | | Test piece | Temper-ature | Slid distance | Coeffi-cient of | Specific wear rate | Ceramics weight change | Co content |
|---|---|---|---|---|---|---|---|---|
| | | Metal | (°C) | (km) | friction | (mm²/N) | (mg) | (wt%) |
| Present inven-tion | No. 7 | Tribaloy 700 | 600 | 165 | 0.30 | $6\times10^{-9}$ | +3 | 55 |
| | No. 8 | Haynes 25 | 600 | 165 | 0.45 | $7\times10^{-9}$ | −2 | 52 |
| | No. 9 | Nimonic 91 | 600 | 165 | 0.50 | $9\times10^{-9}$ | +2 | 20 |
| | No. 13 | Stellite 1 | RT | 165 | 0.40 | $6\times10^{-9}$ | 0 | 49.7 |
| | No. 14 | ′′ | 400 | 165 | 0.35 | $3\times10^{-9}$ | +2 | 49.7 |
| | No. 15 | ′′ | 600 | 165 | 0.30 | $2\times10^{-9}$ | +3 | 49.7 |
| | No. 16 | Stellite 6 | 600 | 165 | 0.40 | $4\times10^{-9}$ | +2 | 59.8 |
| Outside present inven-tion | No. 17 | Incoloy 617 | 600 | 165 | 0.40 | $4.4\times10^{-8}$ | −2 | 12 |
| | No. 19 | R 41 | 600 | 165 | 0.45 | $1.9\times10^{-8}$ | −10 | 11 |
| | No. 20 | Hasteloy X | 600 | 165 | 0.50 | $1.2\times10^{-8}$ | −5 | 1.5 |

EP 0 252 728 B1

Table 2(d)   W series

| | | Test piece | Temper-ature (°C) | Slid distance (km) | Coeffi-cient of friction | Specific wear rate (mm²/N) | Ceramics weight change (mg) | W content (wt%) |
|---|---|---|---|---|---|---|---|---|
| | | Metal | | | | | | |
| Present inven-tion | No. 10 | M2 | RT | 165 | 0.50 | $7\times10^{-9}$ | 0 | 5 |
| | No. 11 | " | 400 | 165 | 0.45 | $4\times10^{-9}$ | +1 | 5 |
| | No. 12 | "( | 600 | 165 | 0.45 | $9\times10^{-10}$ | +3 | 5 |
| Outside present inven-tion | No. 20 | Hasteloy X | 600 | 165 | 0.50 | $1.2\times10^{-8}$ | −5 | 0.6 |

Table 2(e)   Ti series

| | | Test piece | Temper-ature (°C) | Slid distance (km) | Coeffi-cient of friction | Specific wear rate (mm²/N) | Ceramics weight change (mg) | Ti content (wt%) |
|---|---|---|---|---|---|---|---|---|
| | | Metal | | | | | | |
| Present inven-tion | No. 3 | Ti 318 | 600 | 165 | 0.50 | $4\times10^{-9}$ | +2 | 90 |
| | No. 4 | " | RT | 165 | 0.35 | $1\times10^{-9}$ | +11.5 | 90 |
| | No. 5 | Ti 371 | 600 | 165 | 0.40 | $3\times10^{-9}$ | +8 | 84 |

Table 3

| | Test piece | | Temperature (°C) | Slid distance (km) | Coefficient of friction | Specific wear rate (mm²/N) | Ceramics weight change (mg) |
|---|---|---|---|---|---|---|---|
| | Metal | Ceramics | | | | | |
| No. 31 | M2 | SN | RT | 165 | 0.50 | $7 \times 10^{-9}$ | 0 |
| No. 32 | " | SN | 400 | 165 | 0.45 | $4 \times 10^{-9}$ | +1 |
| No. 33 | " | SN | 600 | 165 | 0.45 | $9 \times 10^{-10}$ | +3 |
| No. 34 | " | PSZ | RT | 165 | 0.45 | $5 \times 10^{-9}$ | 0 |
| No. 35 | " | PSZ | 600 | 165 | 0.40 | $2 \times 10^{-9}$ | +4 |
| No. 36 | " | SA | RT | 165 | 0.45 | $6 \times 10^{-9}$ | +1 |
| No. 37 | " | SA | 600 | 165 | 0.45 | $8 \times 10^{-10}$ | +3 |
| No. 38 | " | SC | RT | 165 | 0.40 | $8 \times 10^{-9}$ | 0 |
| No. 39 | " | SC | 600 | 165 | 0.35 | $1 \times 10^{-9}$ | 0 |
| No. 40 | M2+Cu, PbO | SN | 600 | 165 | 0.27 | $7 \times 10^{-10}$ | +4 |

## Claims

1. A metallic slide member for use in combination with a ceramic slide member in a sliding assembly in which the ceramic slide member has a metallic coat lubricating layer on its sliding surface contacted by the metallic slide member, characterized in that said metallic slide member is adapted to form said metallic coat lubricating layer on said sliding surface of said ceramic slide member by transfer of metal at a sliding surface of the metallic slide member onto the ceramic member when the metallic member slides relative to the ceramic member.

2. A metallic slide member according to claim 1, which, at least at its sliding surface, contains not less than 32 wt% of Mo.

3. A metallic slide member according to claim 1, which, at least at its sliding surface, contains not less than 20 wt% of Co.

4. A metallic slide member according to claim 1, which, at least at its sliding surface, contains not less than 84 wt% of Ti.

5. A metallic slide member according to claim 1, which, at least at its sliding surface, contains not less than 5 wt% of W.

6. A metallic slide member according to any one of claims 1 to 5, wherein the metallic slide member, at least at its sliding surface, is made of one of Ti-6Al-4V, Ti-2.5Al-13.5Sn, Co-35Mo-10Si, Ni-15Cr-32Mo-3Si, Co-20Cr-10Ni-15W-3Fe-0.1C, Ni-28Cr-20Co-0.1C-2Ti-1Al-1Nb, Fe-0.8C-4Cr-6W-5Mo-2V, Co-32Cr-12.5W-2.4C-0.6Si-2.3Fe-2.3Ni-0.2Mo, Co-29Cr-4W-1.1C-1.2Si-2.3Fe-2.6Ni and Mo (expressed by weight % in composition).

7. A metallic slide member according to any one of claims 1 to 6, which is an engine component.

8. A metallic slide member according to any one of claims 1 to 7, which is a tappet, a rocker arm tip or a cam.

9. A metallic slide member according to any one of claims 1 to 7, which is a valve or a valve seat.

10. A metallic slide member according to any one of claims 1 to 7, which is a liner and a piston ring.

11. A sliding assembly comprising a metallic slide member according to any one of claims 1 to 10 and a ceramic slide member, said slide members being adapted so that said metallic coat lubricating layer is formed on the sliding surface of the ceramic slide member by said transfer of metal at a sliding surface of the metallic slide member onto the ceramic member when the metallic slide member slides relative to the ceramic member.

12. A sliding assembly according to claim 11, wherein the ceramic slide member is made of a ceramic material selected from silicon nitride, sialon, partially stabilized zirconia and silicon carbide.

## Revendications

1. Elément métallique de glissement utilisé avec un élément céramique de glissement dans un dispositif de glissement où l'élément céramique de glissement a une couche lubrifiante d'une application métallique sur sa surface de glissement contactée par l'élément métallique de glissement, caractérisé en ce que ledit élément métallique de glissement est adapté à former ladite couche de lubrification d'application métallique sur ladite surface de glissement dudit élément céramique de glissement par transfert du métal à une surface de glissement de l'élément métallique de glissement à l'élément céramique quand l'élément métallique glisse relativement à l'élément céramique.

2. Elément métallique de glissement selon la revendication 1 qui,au moins sur sa surface de glissement,ne contient pas moins de 32% en poids de Mo.

3. Elément métallique de glissement selon la revendication 1 qui, au moins sur sa surface de glissement, ne contient pas moins de 20% de Co.

4. Elément métallique de glissement selon la revendication 1 qui, au moins sur sa surface de glissement,ne contient pas moins de 84% de Ti.

5. Elément métallique de glissement selon la revendication 1 qui, au moins sur sa surface de glissement, ne contient pas moins de 5% de W.

6. Elément métallique de glissement selon l'une quelconque des revendications 1 à 5, où l'élément métallique de glissement, au moins à sa surface de glissement, est fait de l'un de Ti-6Al-4V, Ti-2,5Al-13,5Sn, Co-35Mo-10Si, Ni-15Cr-32Mo-3Si, Co-20Cr-10Ni-15W-3Fe-0,1C, Ni-28Cr-20Co-O,1C-2Ti-1Al-1Nb, Fe-O,8C-4Cr-6H-5Mo-2V, Co-32Cr-12,5W-2,4C-0,6Si-2,3Fe-2,3Ni-0,2Mo, Co-29Cr-4W-1,1C-1 ,2Si-2,3Fe-2,6Ni et Mo (en exprimant en pourcentage pondéral en composition).

7. Elément métallique de glissement selon l'une quelconque des revendications 1 à 6, qui est un composant de moteur.

8. Elément métallique de glissement selon l'une quelconque des revendications 1 à 7, qui est un taquet, une extrémité de culbuteur ou une came.

9. Elément métallique de glissement selon l'une quelconque des revendications 1 à 7, qui est une soupape ou un siège de soupape.

10. Elément métallique de glissement selon l'une quelconque des revendications 1 à 7, qui est une chemise et un segment de piston.

11. Dispositif de glissement comprenant un élément métallique de glissement selon l'une quelconque des revendications 1 à 10 et un élément céramique de glissement, lesdits éléments de glissement étant adaptés à ce que la couche de lubrification d'application métallique soit formée sur la surface de glissement de l'élément céramique de glissement par ledit transfert de métal sur une surface de glissement de l'élément métallique de glissement sur l'élément céramique quand l'élément métallique de glissement glisse relativement à l'élément céramique.

12. Dispositif de glissement selon la revendication 11, où l'élément céramique de glissement est fait en un matériau de céramique choisi parmi le nitrure de silicium, le sialon, la zircone partiellement stabilisée et le carbure de silicium.

## Ansprüche

1. Metallisches Gleitelement zur Verwendung in Kombination mit einem keramischen Gleitelement in einer Gleitvorrichtung, wobei das keramische Gleitelement auf seiner mit dem metallischen Gleitelement in Kontakt stehenden Gleitfläche eine Metallüberzugsschmierschicht aufweist, dadurch gekennzeichnet, daß das metallische Gleitelement die Eigenschaft hat, die Metallüberzugsschmierschicht auf der Gleitfläche des keramischen Gleitelements durch Übertragung von Metall an einer Gleitfläche des metallischen Gleitelements auf das keramische Element zu bilden, wenn das metallische Element relativ zu dem keramischen Element gleitet.

2. Metallisches Gleitelement nach Anspruch 1, das zumindest auf seiner Gleitfläche nicht weniger als 32 Gew.-% Mo enthält.

3. Metallisches Gleitelement nach Anspruch 1, das zumindest auf seiner Gleitfläche nicht weniger als 20 Gew.-% Co enthält.

4. Metallisches Gleitelement nach Anspruch 1, das zumindest auf seiner Gleitfläche nicht weniger als 84 Gew.-% Ti enthält.

5. Metallisches Gleitelement nach Anspruch 1, das zumindest auf seiner Gleitfläche nicht weniger als 5 Gew.-% Wo enthält.

6. Metallisches Gleitelement nach einem der Ansprüche 1 bis 5, bei dem das metallische Gleitelement zumindest auf seiner Gleitfläche aus einem von Ti-6Al-4V, Ti-2.5Al-13.5Sn, Co-35Mo-10Si, Ni-15Cr-32Mo-3Si, Co-20Cr-10Ni-15W-3Fe-0.1C, Ni-28Cr-20Co-0.1C-2Ti-1Al-1Nb, Fe-0.8C-4Cr-6W-5Mo-2V, Co-32Cr-12.5W-2.4C-0.6Si-2.3Fe-2.3Ni-0.2Mo, Co-29Cr-4W-1.1C-1.2Si-2.3Fe-2.6Ni und Mo (ausgedrückt durch Gew.-% in der Zusammensetzung) hergestellt ist.

7. Metallisches Gleitelement nach einem der Ansprüche 1 bis 6, bei dem es sich um ein Motorteil handelt.

8. Metallisches Gleitelement nach einem der Ansprüche 1 bis 7, bei dem es sich um einen Stößel, ein Kipphebelende oder einen Nocken handelt.

9. Metallisches Gleitelement nach einem der Ansprüche 1 bis 7, bei dem es sich um ein Ventil oder einen Ventilsitz handelt.

10. Metallisches Gleitelement nach einem der Ansprüche 1 bis 7, bei dem es sich um ein Futter und einen Kolbenring handelt.

11. Gleitvorrichtung, die ein metallisches Gleitelement nach einem der Ansprüche 1 bis 10 und ein keramisches Gleitelement enthält, wobei die Gleitelemente so beschaffen sind, daß die Metallüberzugsgleitschicht auf der Gleitfläche des keramischen Gleitelements durch die Übertragung von Metall an einer Gleitfläche des metallischen Gleitelements auf das keramische Element gebildet wird, wenn das metallische Gleitelement relativ zu dem keramischen Element gleitet.

12. Gleitvorrichtung nach Anspruch 11, bei dem das keramische Gleitelement aus einem keramischen Material ausgewählt aus Siliciumnitrid, Sialon, teilweise stabilisiertem Zirkonoxid und Siliciumcarbid hergestellt ist.

# FIG_1

# FIG. 2

X - Ray Energy , KeV

# FIG. 3